**Europäisches Patentamt**

**European Patent Office**

**Office européen des brevets**

(19)

(11) **EP 1 167 874 A1**

(12) **EUROPÄISCHE PATENTANMELDUNG**

(43) Veröffentlichungstag:
**02.01.2002 Patentblatt 2002/01**

(51) Int Cl.⁷: **F21V 8/00**

(21) Anmeldenummer: **01115347.5**

(22) Anmeldetag: **26.06.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **01.07.2000 DE 10032158**

(71) Anmelder: **Hella KG Hueck & Co.**
**59552 Lippstadt (DE)**

(72) Erfinder: **Neumann, Cornelius, Dr.**
**33649 Bielefeld (DE)**

(54) **Stabförmiger Lichtleiter**

(57) Die Erfindung betrifft einen stabförmigen Lichtleiter, insbesondere für eine Signalleuchte für Kraftfahrzeuge, bestehend aus einem Stabkörper (1) mit mindestens zwei an einer Stirnseite desselben angeordneten Lichteinkoppelflächen (6) und einer in Richtung einer Längsachse angeordneten quer zur Längsachse abstrahlenden Lichtaustrittsfläche (5), und einer der Lichtaustrittsfläche (5) gegenüberliegenden Reflexionsfläche (4) zum Reflektieren des über die Lichteinkoppelflächen (6) eingekoppelten Lichtes in Richtung der Lichtaustrittsfläche (5), wobei die Lichteinkoppelflächen (6) nebeneinander in einer zu der Reflexionsfläche (4) und der Lichtaustrittsfläche (5) senkrecht stehenden Ebene angeordnet sind und dass der Abstand der Reflexionsfläche (4) und der Lichtaustrittsfläche (5) derart bemessen ist, dass der Verlauf der an der Reflexionsfläche (4) in Richtung der Lichtaustrittsfläche (5) reflektierten Lichtstrahlen im Wesentlichen dem Verlauf der an einer Reflexionsfläche (4) eines lediglich einer einzige Lichteinkoppelfläche (6) aufweisenden Stabkörpers (1) reflektierten Lichtstrahlen ähnelt.

Figur 1

EP 1 167 874 A1

**Beschreibung**

Die Erfindung betrifft einen stabförmigen Lichtleiter, insbesondere für eine Signalleuchte für Kraftfahrzeuge, bestehend aus einem Stabkörper mit mindestens zwei an einer Stirnseite desselben angeordneten Lichteinkoppelflächen, einer in Richtung einer Längsachse angeordneten quer zur Längsachse abstrahlenden Lichtaustrittsfläche und einer der Lichtaustrittsfläche gegenüberliegenden Reflexionsfläche zum Reflektieren des über die Lichteinkoppelflächen eingekoppelten Lichtes in Richtung der Lichtaustrittsfläche.

Aus der DE 41 29 094 A1 sind stabförmige Lichtleiter bekannt, an deren zumindest einer Stirnseite Licht einkoppelbar ist. Das eingekoppelte Licht wird mittels Totalreflexion durch den Lichtleiter geführt, wobei sich in Längsrichtung des Lichtleiters eine Reflexionsfläche erstreckt, die die Lichtstrahlen in Richtung einer gegenüberliegenden Lichtaustrittsfläche reflektiert. Die Reflexionsfläche wird durch eine Vielzahl von Prismen gebildet, die quer zur Längsachse des stabförmigen Lichtleiters angeordnet sind. Der stabförmige Lichtleiter ist im Wesentlichen zylindrisch ausgebildet, wobei stirnseitig zwischen der Reflexionsfläche und der Lichtaustrittsfläche jeweils eine einzige Lichteinkoppelfläche bzw. Lichtquelle angeordnet ist.

Nachteilig an dem bekannten stabförmigen Lichtleiter ist, dass an einer Stirnseite desselben lediglich das Licht einer einzigen Lichtquelle eingekoppelt werden kann.

Aufgabe der vorliegenden Erfindung ist es daher, einen stabförmigen Lichtleiter mit mehreren Lichteinkoppelflächen derart weiterzubilden, so dass auf herstellungstechnisch einfache Weise die Lichtausbeute des Lichtleiters verbessert wird.

Diese Aufgabe wird erfindungsgemäß in Verbindung mit dem Oberbegriff des Patenanspruchs 1 dadurch gelöst, dass die Lichteinkoppelflächen nebeneinander in einer zu der Reflexionsfläche und der Lichtaustrittsfläche senkrecht stehenden Ebene angeordnet sind und dass der Abstand der Reflexionsfläche und der Lichtaustrittsfläche derart bemessen ist, dass der Verlauf der an der Reflexionsfläche in Richtung der Lichtaustrittsfläche reflektierten Lichtstrahlen im Wesentlichen dem Verlauf der an einer Reflexionsfläche eines lediglich eine einzige Lichteinkoppelfläche aufweisenden Stabkörpers reflektierten Lichtstrahlen ähnelt.

Die Erfindung ermöglicht durch eine Verbreiterung des Stabkörpers, wobei sich in einer zu der Reflexionsfläche einerseits und der Lichtaustrittsfläche andererseits senkrecht erstreckenden Ebene hintereinander mindestens zwei Lichteintrittsflächen angeordnet sind, eine erhöhte Leuchtstärke bzw. -intensität des Stabkörpers. Die von den nebeneinander angeordneten Lichteintrittsflächen eingekoppelten Lichtstrahlen der Lichtquellen werden an derselben Reflexionsfläche in Richtung der Lichtaustrittsfläche reflektiert. Dadurch, dass der Stabkörper derart verbreitert wird, dass der Verlauf der an der Reflexionsfläche reflektierten Lichtstrahlen dem Verlauf der Lichtstrahlen ähnelt, der sich bei Ausbildung eines Stabkörpers mit lediglich einer einzigen Lichteintrittsfläche ergibt, werden optisch ähnliche Randbedingungen geschaffen, die eine Stabgeometrie mit relativ geringen Verlusten erzeugen.

Nach einer besonderen Ausführungsform der Erfindung ist die Lichtaustrittsfläche im Querschnitt bogenförmig ausgebildet und weist einen zu einer Hauptebene derselben näher angeordneten ersten Brennpunkt und einen zur Hauptebene entfernter angeordneten zweiten Brennpunkt auf. Der Abstand der Lichtaustrittsfläche zu der Reflexionsfläche entspricht dem doppelten Abstand der Reflexionsfläche zu dem zweiten Brennpunkt. Ausgangspunkt für die so ermittelte Breite des Stabkörpers ist die Erkenntnis, dass ausgehend von einem Abstand einer im ersten Brennpunkt befindlichen Reflexionsfläche durch Spiegelung derselben an dem zweiten Brennpunkt sich ein solcher erhöhter Abstand zwischen Reflexionsfläche einerseits und der Lichtaustrittsfläche andererseits ergibt, der den optischen Verhältnissen der ursprünglichen Lage der Reflexionsfläche weitgehend entspricht.

Nach einer besonderen Ausführungsform der Erfindung entspricht die Breite des Stabkörpers, d. h. der Abstand der Reflexionsfläche von der Lichtaustrittsfläche, dem doppelten Abstand des ersten Brennpunktes zu der Hauptebene. Vorteilhaft lässt sich hierdurch bei Anordnung eines Stabkörpers mit zwei Lichteinkoppelflächen ein Strahlenverlauf von ausgekoppelten Lichtstrahlen realisieren, der den Verlauf der Lichtstrahlen bei einem Stabkörper mit lediglich einer einzigen Lichteinkoppelfläche entspricht. Dadurch, dass der Stabkörper bezüglich der senkrecht zu der Reflexionsfläche und der Lichtaustrittsfläche verlaufenden Längsmittelebene des Stabkörpers symmetrisch ausgebildet ist, hat die im Zuge der Verbreiterung des Stabkörpers resultierende Umkehrung der Abbildung keinen Einfluss auf den Strahlengang.

Nach einer Weiterbildung der Erfindung weist der Stabkörper an in Richtung der Längsachse erstreckenden Seitenfläche eine Defokussierungsfläche auf, mittels derer die an der Reflexionsfläche reflektierten Lichtstrahlen gestreut werden. Auf diese Weise kann der Anteil der durch die Lichtaustrittsfläche abgestrahlten Lichtstrahlen gegenüber den insgesamt eingekoppelten Lichtstrahlen vergrößert werden.

Nach einer Weiterbildung der Erfindung erstreckt sich die Defokussierungsfläche durchgehend in Längsrichtung des Stabkörpers und weist eine im Querschnitt kreisringförmige Vertiefung auf. Alternativ kann die Defokussierungsfläche auch als Freifläche ausgebildet sein, deren Kontur an den durch die Form der Reflexionsfläche einerseits und der Lichtaustrittsfläche andererseits vorgegebenen Strahlenverlauf angepasst ist.

Nach einer Weiterbildung der Erfindung ist der Stabkörper als einstückiger Mehrfachstabkörper ausgebildet, wobei Einfachstabkörper senkrecht zur Erstrek-

kung der benachbarten Lichteinkoppelflächen des Einfachstabkörpers angeordnet sind. Auf diese Weise kann auf einfache herstellungstechnische Art eine zweidimensionale Leuchte geschaffen werden. Zum einen kann der Mehrfachstabkörper durch mehrere symmetrisch zu einer mittleren Längsebene des Einfachstabkörpers ausgebildete Einfachstabkörper gebildet sein, wobei die einzelnen Einfachstabkörper die gleiche Geometrie aufweisen. Alternativ kann die Reflexionsfläche des Mehrfachstabkörpers durchgehend ausgebildet sein. Auf diese Weise lässt sich der Reflexionsgrad der Lichtstrahlen erhöhen.

Ausführungsbeispiele der Erfindung werden nachfolgend anhand der Zeichnungen näher erläutert.

Es zeigen:

Figur 1    eine schematische Seitenansicht eines stabförmigen Lichtleiters,

Figur 2    einen Querschnitt durch den stabförmigen Lichtleiter gemäß Figur 1 entlang der Linie II-II, wobei der Strahlengang durch die Lichtaustrittsfläche dargestellt ist,

Figur 3    einen Querschnitt durch einen stabförmigen Lichtleiter nach einem zweiten Ausführungsbeispiel, der mit Defokussierungsflächen versehen ist,

Figur 4    einen Querschnitt durch einen Mehrfachstabkörper, der aus bezüglich einer mittleren Längsebene symmetrischen Einzelstabkörpern gebildet ist und

Figur 5    einen Querschnitt durch einen Mehrfachstabkörper mit einer durchgehenden Reflexionsfläche.

Ein stabförmiger Lichtleiter besteht im Wesentlichen aus einem Stabkörper 1 mit gegenüberliegenden Stirnflächen 2, im Bereich derer zumindest an einer Seite mehrere Lichtquellen 3 angeordnet sind, mit einer Reflexionsfläche 4 und einer gegenüberliegenden Lichtaustrittsfläche 5.

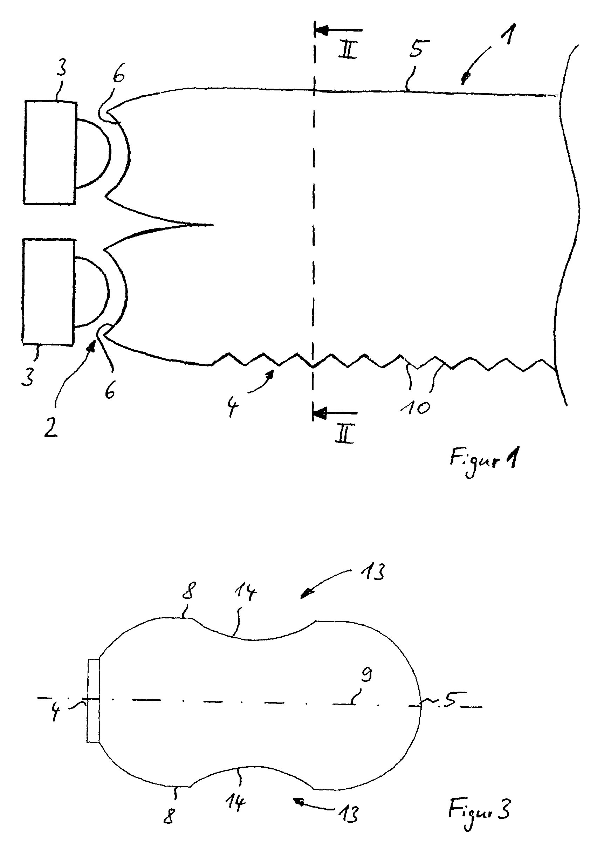

Die Stirnfläche 2 weist im Ausführungsbeispiel gemäß Figur 1 zwei muldenförmige Lichteinkoppelflächen 6 auf, die nebeneinander liegend in einer gemeinsamen Erstreckungsebene angeordnet sind, wobei die Erstreckungsebene senkrecht zur Erstreckung der im Wesentlichen parallel zur Längsachse des Stabkörpers 1 verlaufenden Reflexionsfläche 4 einerseits und der Lichtaustrittsfläche 5 andererseits steht.

Den Lichteinkoppelflächen 6 sind jeweils punktförmige Lichtquellen 3 vorgelagert. Die Lichtquelle 3 kann als Leuchtdiode (LED) ausgebildet sein.

Die Reflexionsfläche 4 und die Lichtaustrittsfläche 5 sind gegenüberliegend zueinander ausgerichtet und über gegenüberliegende Seitenflächen 8 miteinander verbunden.

Die Reflexionsfläche 4 weist eine Vielzahl von quer zu einer Längsebene 9, in der sich die Lichtquellen 3 erstrecken, angeordnete Prismen 10 auf.

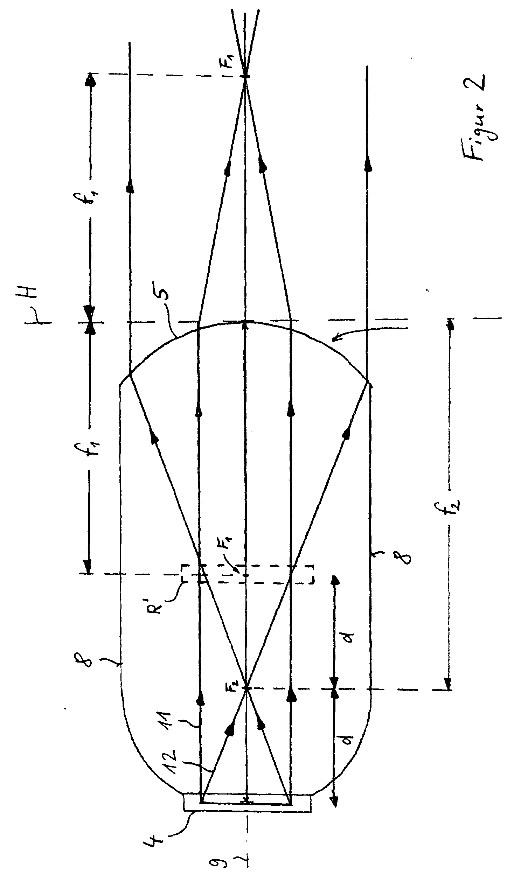

Wie aus Figur 2 ersichtlich ist, ist die Lichtaustrittsfläche 5 im Querschnitt kreisbogenförmig ausgebildet. Die Lichtaustrittsfläche 5 erstreckt sich in Richtung der Längsachse des Stabkörpers 1 durchgehend, wobei ein zu einer Hauptebene H derselben näher angeordneter erster Brennpunkt $F_1$ und ein zu der Hauptebene H entfernter angeordneter zweiter Brennpunkt $F_2$ gebildet ist. Die Breite des Stabkörpers 1 zwischen der Reflexionsfläche 4 einerseits und der Lichtaustrittsfläche 5 andererseits entspricht dem doppelten Abstand $f_1$ des ersten Brennpunktes $F_1$ zu der Hauptebene H.

Alternativ kann die Reflexionsfläche 4 auch in der Nähe des doppelten Abstands $f_1$ von der Hauptebene H angeordnet sein. Hierdurch lassen sich nur unwesentlich schlechtere lichttechnische Ergebnisse erzielen.

Der Abstand $f_1$ des Brennpunktes $F_1$ ergibt sich in Abhängigkeit von dem Brechungsindex n und dem Radius R der bogenförmigen Lichtaustrittsfläche 5 gemäß der Gleichung

$$f_1 = \frac{1}{n-1} * R.$$

Ein Abstand $f_2$ des zweiten Brennpunktes $F_2$ von der Hauptebene H lässt sich nach folgende Gleichung ermitteln:

$$f_2 = \frac{n}{n-1} * R.$$

Im vorliegenden Ausführungsbeispiel ist der Stabkörper 1 aus einem Acrylglas bzw. einem Polymethylmethacrylat (PMMA) mit einem Brechungsindex n von etwa 1,49 ausgebildet, so dass sich für den Abstand $f_1$ des ersten Brennpunktes $F_1$ ein Wert von 2 R und für den Abstand $f_2$ des zweiten Brennpunktes $F_2$ ein Wert von 3 R ergibt.

Wie durch den in Figur 2 dargestellten Strahlengang verdeutlicht wird, entspricht der Verlauf der an der Reflexionsfläche 4 reflektierten Lichtstrahlen bei Wahl der Breite des Stabkörpers von 2 $f_1$ im Wesentlichen dem Verlauf der Strahlen bei Vorsehen einer Breite des Stabkörpers $f_1$, die bei Stabkörpern mit Stirnflächen von lediglich einer einzigen Lichteintrittsfläche vorgesehen ist (Anordnung einer Reflexionsfläche R' im Brennpunkt F1). Ein innerer Lichtstrahl 11, der von der Reflexionsfläche 4 in Richtung der Längsebene 9 reflektiert wird, wird in gleicher Weise an der Lichtaustrittsfläche 5 in Richtung des ersten Brennpunktes $F_1$ gebrochen wie bei einem Abstand der Reflexionsfläche 4 von etwa der Brennweite $f_1$ zu der Hauptebene H. Ein äußerer Lichtstrahl 12, der durch den zweiten Brennpunkt $F_2$ verläuft, erfährt durch die Positionierung der Reflexionsfläche 4 in einem Abstand d zu dem zweiten Brennpunkt $F_2$ auf einer der Lichtaustrittsfläche 5 abgewandten Seite des Brennpunktes $F_2$ den gleichen Verlauf wie ein Randstrahl einer Reflexionsfläche R', die in einem Abstand d von dem zweiten Brennpunkt $F_2$ auf eine der Lichtaustrittsfläche 5 zugewandten Seite desselben angeordnet ist. Die Abbildung durch die Reflexionsfläche 4, R ist lediglich umgekehrt zu der durch die Reflexionsfläche R' gebildeten Abbildung.

Dadurch, dass in Richtung der Längsebene 9 zwei Lichtquellen 3 angeordnet sind, deren emittierte Lichtstrahlen an derselben Reflexionsfläche 4, R reflektiert werden, kann die Leuchtintensität mittels der durch die Lichtaustrittsfläche 5 austretenden Lichtstrahlen entsprechend vergrößert werden.

Nach einer alternativen nicht dargestellten Ausführungsform des Stabkörpers 1 kann die Lichtaustrittsfläche auch im Querschnitt ellipsoid- oder paraboloidförmig ausgebildet sein. Hierdurch ergeben sich andere Brennpunkte bzw. andere Brennweiten. Wesentlich an der Erfindung ist, dass ausgehend von einer Reflexionsfläche für einen Einzelstabkörper (mit einer einzigen Lichteinkoppelfläche) die Positionierung der Reflexionsfläche für den Stabkörper mit mehreren Lichteinkoppelflächen durch Spiegelung der Reflexionsfläche für einen Einzelstabkörper an einem Brennpunkt der Lichtaustrittsfläche gebildet wird.

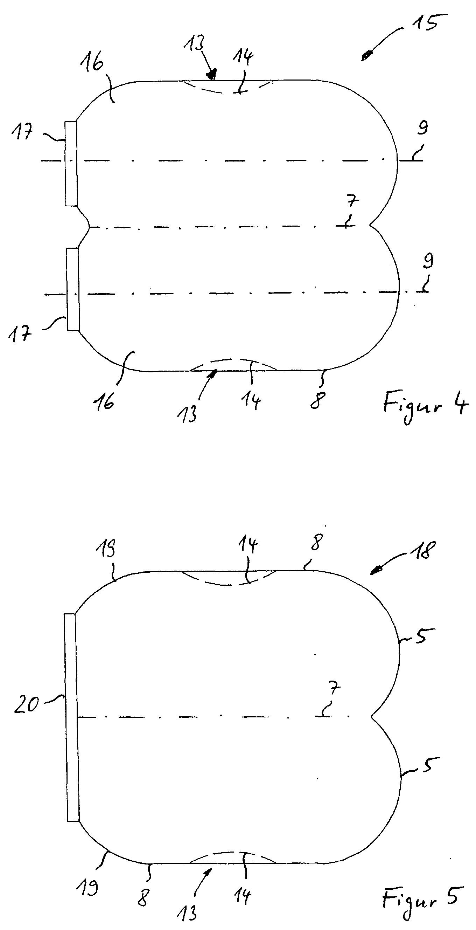

Zur defokussierenden bzw. streuenden Ablenkung der reflektierten Strahlen 11, 12 können an den Seitenflächen 8 gemäß Figur 3 Defokussierungsflächen 13 angeordnet sein. Die Defokussierungsfläche 13 kann konkavförmig oder als Freifläche ausgebildet sein, deren Kontur auf die vorgegebene Lichtverteilung angepasst sein kann.

In dem vorliegenden Ausführungsbeispiel gemäß Figur 3 ist die Defokussierungsfläche 13 als eine kreisringförmige Vertiefung 14 ausgebildet, die sich durchgehend von der einen Stirnfläche 2 zu der gegenüberliegenden Stirnfläche 2 des Stabkörpers 1 erstreckt. Die kreisringförmigen Vertiefungen 14 erstrecken sich an gegenüberliegenden Seitenflächen 8, so dass der Stabkörper 1 bezüglich der Längsebene 9 einen symmetrischen Verlauf aufweist.

Nach einer Ausführungsform der Erfindung kann der Stabkörper als ein Mehrfachstabkörper 15 ausgebildet sein, der aus mehreren senkrecht zu der Längsebene 9 verlaufenden Einfachstabkörper 16 gebildet ist. Die Einfachstabkörper 16 sind einstückig miteinander verbunden. An den Stirnflächen des Mehrfachstabkörpers 15 ist ein zweidimensionales Feld von Lichteinkoppelflächen 6 bzw. Lichtquellen 3 angeordnet. Auf diese Weise wird eine zweidimensionale Beleuchtung ermöglicht.

Gemäß Figur 4 ist der Mehrfachstabkörper 15 durch mehrere gleichförmige Einfachstabkörper 16 gebildet, deren Reflexionsflächen 17 voneinander beabstandet sind.

Die Einfachstabkörper 16, 19 weisen zueinander gekehrte Grenzflächen 7 auf, die parallel zu der Längsebene 9 der Einfachstabkörper 16, 19 verlaufen, in der sich die Lichteinkoppelflächen (6) der Einfachstabkörper 16, 19 erstrecken.

Nach einem weiteren Ausführungsbeispiel gemäß Figur 5 ist ein Mehrfachstabkörper 18 vorgesehen, der mehrere Einfachstabkörper 19 aufweist, deren Reflexionsflächen 20 unmittelbar zu Reflexionsflächen 20 benachbarter Einfachstabkörper 19 anschließen. Auf diese Weise ist die Reflexionsfläche 20 durchgehend und ununterbrochen ausgebildet.

Die randseitigen Einfachstabkörper 16 bzw. 19 der Mehrfachstabkörper 15, 18 können an den randseitigen Seitenflächen Defokussierungsflächen 13 aufweisen.

Das von den Lichtquellen 3 ausgestrahlte Licht wird über die Lichteinkoppelflächen 6 in den Stabkörper 1 eingekoppelt und durch Totalreflexion weitergeleitet. Auf die Prismen 10 der Reflexionsfläche 4, R auftreffende Lichtstrahlen werden reflektiert und treten auf der den Prismen 10 gegenüberliegenden Lichtaustrittsfläche 5 aus.

Die Reflexionsfläche 4 bzw. die Prismen 10 weisen eine galvanische Beschichtung auf und sind verspiegelt ausgebildet.

**Patentansprüche**

1. Stabförmiger Lichtleiter, insbesondere für eine Signalleuchte für Kraftfahrzeuge, bestehend aus einem Stabkörper mit mindestens zwei an einer Stirnseite desselben angeordneten Lichteinkoppelflächen, einer in Richtung einer Längsachse angeordneten quer zur Längsachse abstrahlenden Lichtaustrittsfläche und einer der Lichtaustrittsfläche gegenüberliegenden Reflexionsfläche zum Reflektieren des über die Lichteinkoppelflächen eingekoppelten Lichtes in Richtung der Lichtaustrittsfläche, **dadurch gekennzeichnet, dass** die Lichteinkoppelflächen (6) nebeneinander in einer zu der Reflexionsfläche (4) und der Lichtaustrittsfläche (5) senkrecht stehenden Ebene angeordnet sind und dass der Abstand der Reflexionsfläche (4) und der Lichtaustrittsfläche (5) derart bemessen ist, dass der Verlauf der an der Reflexionsfläche (4) in Richtung der Lichtaustrittsfläche (5) reflektierten Lichtstrahlen im Wesentlichen dem Verlauf der an einer Reflexionsfläche (R') eines lediglich eine einzige Lichteinkoppelfläche (6) aufweisenden Stabkörpers reflektierten Lichtstrahlen ähnelt.

2. Stabförmiger Lichtleiter nach Anspruch 1, **dadurch gekennzeichnet, dass** die Lichtaustrittsfläche (5) im Querschnitt bogenförmig ausgebildet ist, wobei ein zu einer Hauptebene (H) derselben näher angeordneter erster Brennpunkt ($F_1$) und ein zu der Hauptebene (H) entfernter angeordneter zweiter

Brennpunkt ($F_2$) gebildet ist, und dass die Reflexionsfläche (4) durch Spiegelung der Reflexionsfläche (R') des lediglich eine einzige Lichteintrittsfläche aufweisenden Stabkörpers an einem zweiter Brennpunkt ($F_2$) weiter von der Lichtaustrittsfläche (5) angeordnet ist.

3. Stabförmiger Lichtleiter nach Anspruch 1 oder 2, **dadurch gekennzeichnet, dass** die Lichtaustrittsfläche (5) im Querschnitt kreisringförmig ausgebildet ist und dass der Abstand der Reflexionsfläche (4) zu der Lichtaustrittsfläche (5) im wesentlichen einem doppelten Abstand ($f_1$) des ersten Brennpunktes ($F_1$) zu der Hauptebene (H) entspricht.

4. Stabförmiger Lichtleiter nach Anspruch 3, **dadurch gekennzeichnet, dass** der zweite Brennpunkt ($F_2$) einen solchen Abstand ($f_2$) von der Hauptebene (H) einhält, der in Abhängigkeit von einem Radius (R) der Lichtaustrittsfläche (5) und von einem Brechungsindex (n) des Stabkörpers der Gleichung

$$f_2 = \frac{n}{n-1} *R$$

folgt.

5. Stabförmiger Lichtleiter nach einem der Ansprüche 1 bis 4, **dadurch gekennzeichnet, dass** zumindest eine sich in Richtung der Längsachse erstreckenden Seitenfläche (8) des Stabkörpers (1) mindestens eine Defokussierungsfläche (13) aufweist zur Zerstreuung der Lichtstrahlen.

6. Stabförmiger Lichtleiter nach Anspruch 5, **dadurch gekennzeichnet, dass** die Defokussierungsfläche (13) konkavförmig oder im Querschnitt als eine kreisringförmige Vertiefung (14) ausgebildet ist.

7. Stabförmiger Lichtleiter nach einem der Ansprüche 1 bis 6, **dadurch gekennzeichnet, dass** die Lichteinkoppelflächen (6) muldenförmig ausgebildet und jeweils zu einer Leuchtdiode (3) ausgerichtet sind.

8. Stabförmiger Lichtleiter nach einem der Ansprüche 1 bis 7, **dadurch gekennzeichnet, dass** der Stabkörper als eine einstückiger Mehrfachstabkörper (15, 18) ausgebildet ist, mit mehreren nebeneinander angeordneten Einfachstabkörpern (16, 19), deren zueinander gekehrten Grenzflächen (7) parallel zu der Längsebene (9) verlaufen, in der die Lichteinkoppelflächen (6) eines Einfachstabkörpers (16, 19) sich erstrecken.

9. Stabförmiger Lichtleiter nach Anspruch 8, **dadurch gekennzeichnet, dass** die Reflexionsflächen (20) der Einfachstabkörper (19) quer zur Längsachse des Mehrfachstabkörpers (18) durchgehend ausgebildet sind.

10. Stabförmiger Lichtleiter nach einem der Ansprüche 1 bis 9, **dadurch gekennzeichnet, dass** die Reflexionsfläche (4) durch eine Vielzahl von quer zu einer Längsachse des Stabkörpers (1, 16, 19) angeordneten Prismen (10) gebildet ist.

11. Stabförmiger Lichtleiter nach einem der Ansprüche 1 bis 10, **dadurch gekennzeichnet, dass** der Stabkörper (1, 15, 18) aus einem Kunststoffmaterial hergestellt ist.

Figur 1

Figur 3

Figur 2

Figur 4

Figur 5

**Europäisches Patentamt**

# EUROPÄISCHER RECHERCHENBERICHT

Nummer der Anmeldung

EP 01 11 5347

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| D,A | DE 41 29 094 A (HELLA KG HUECK & CO) 4. März 1993 (1993-03-04) * Zusammenfassung; Abbildungen 1-9 * | 1 | F21V8/00 |
| A | GB 2 234 581 A (PIONEER ELECTRONIC CORP) 6. Februar 1991 (1991-02-06) * Zusammenfassung; Abbildungen 4A-4D * | 1 | |

**RECHERCHIERTE SACHGEBIETE (Int.Cl.7)**

F21V

Der vorliegende Recherchenbericht wurde für alle Patentansprüche erstellt

| Recherchenort | Abschlußdatum der Recherche | Prüfer |
|---|---|---|
| DEN HAAG | 5. Oktober 2001 | Malic, K |

## ANHANG ZUM EUROPÄISCHEN RECHERCHENBERICHT
## ÜBER DIE EUROPÄISCHE PATENTANMELDUNG NR.

EP 01 11 5347

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-10-2001

| Im Recherchenbericht angeführtes Patentdokument | | Datum der Veröffentlichung | Mitglied(er) der Patentfamilie | | Datum der Veröffentlichung |
|---|---|---|---|---|---|
| DE 4129094 | A | 04-03-1993 | DE | 4129094 A1 | 04-03-1993 |
| GB 2234581 | A | 06-02-1991 | JP | 3065982 A | 20-03-1991 |
| | | | DE | 4024747 A1 | 14-02-1991 |
| | | | US | 5070431 A | 03-12-1991 |

Für nähere Einzelheiten zu diesem Anhang : siehe Amtsblatt des Europäischen Patentamts, Nr.12/82

EPO FORM P0461